Europäisches Patentamt

European Patent Office

Office européen des brevets

(11) Publication number: 0 382 346
A2

# EUROPEAN PATENT APPLICATION

(21) Application number: 90300441.4

(22) Date of filing: 16.01.90

(51) Int. Cl.⁵: B60S 1/34

(30) Priority: 10.02.89 GB 8903077

(43) Date of publication of application:
16.08.90 Bulletin 90/33

(84) Designated Contracting States:
DE ES FR

(71) Applicant: DELCO PRODUCTS OVERSEAS
CORPORATION
3044 West Grand Boulevard
Detroit Michigan 48202(US)

(72) Inventor: Gower, Michael J.
6 Butely Road
Luton, Bedfordshire LU4 9HE(GB)

(74) Representative: Haines, Arthur Donald et al
Patent Section (F6) Vauxhall Motors Limited
P.O. Box 3 Kimpton Road
Luton, Beds. LU2 0SY(GB)

(54) Windscreen wiper assembly for a motor vehicle.

(57) A windscreen wiper assembly, for use as a passenger windscreen wiper assembly in a motor vehicle, comprises a drive crank (24) secured to one end of a spindle (20) rotatably mounted in a bore housing (22) on a rigid support frame (16), the other end of which spindle (20) is secured to one end of a first link (12), the other end of which is pivotally connected to one end of a wiper arm (18). A second, cranked link (14) is pivotally mounted at one end to a bore housing (46) on the support frame (16), and is pivotally connected at the other end to a bore housing (34) on the wiper arm (18) at a predetermined distance from the pivot point between the first link (12) and the wiper arm (18). Reciprocatory movement of drive crank (24) produces a similar reciprocatory movement of link (12), which causes wiper arm (18) to oscillate about the pivot point between the second link (14) and the wiper arm (18), which oscillation, in turn, causes reciprocatory movement of second link (14) about its pivot point with support frame (16). The combined movement of the wiper arm (18) thus produced results in a wiper blade attached to a free end of wiper arm (18) sweeping out an asymmetric wiping arc on a windscreen which is preferentially distorted outwards relative to a conventional radial wiping arc that said wiper blade would sweep out if the wiper arm (18) were directly pivoted to the support frame (16) in a conventional manner.

Fig.1.

## WINDSCREEN WIPER ASSEMBLY FOR A MOTOR VEHICLE

This invention relates to windscreen wiper assemblies for motor vehicles, in particular to a windscreen wiper assembly having means for wiping an area of a vehicle windscreen lying outside the conventional radial wiping arc produced by the reciprocation of a wiper blade mounted on the free end of a pivotally-mounted wiper arm.

Increasing numbers of motor vehicles are now being manufactured having windscreens that are large in area compared with the size of vehicle containing them, and are of shapes that are difficult to wipe to an adequate extent with the use of conventional pivotally-mounted windscreen wipers having blades thereon which reciprocate through conventional radial arcs in order to wipe said windscreens. Consequently there have been many proposals made in the past for modifying windscreen wiper assemblies so as to extend or alter the area wiped on a windscreen from that obtained by the use of said conventional pivotally-mounted windscreen wipers. Thus, for example, US-A 3,831,220 discloses a windscreen wiper assembly in which a wiper arm is slidably mounted in a pivoted holder which reciprocates to and fro in the manner of a conventional pivotally-mounted windscreen wiper, with the wiper arm being extended and retracted during the reciprocal movement of the holder by means of a gear and linkage arrangement, so that a wiper blade carried on the wiper arm wipes a larger area of the windscreen than that wiped by a conventional pivotally-mounted windscreen wiper of the same size. An alternative arrangement for varying the wipe pattern for a windscreen wiper is disclosed in GB-A 977,607, in which one end of a wiper blade pivotally mounted on a wiper arm is tethered to a point adjacent the windscreen by means of a linkage, so as to cause that wiper blade to partially rotate about the wiper arm as the wiper arm reciprocates to and fro. Many of the previous proposals made involve the use of relatively complex linkages and/or extendable wiper arms, and are thus expensive to manufacture and difficult to make sufficiently robust for a long service life.

A windscreen wiper assembly for a motor vehicle according to the present invention comprises a drive motor drivingly connected to one end of a first crank arm, the other end of which is pivotally connected to one end of a second, longer crank arm by a transfer link such that rotation of said first crank arm by said drive motor produces reciprocal motion of said second crank arm about a first spindle pivotally mounted on a fixed support frame, said spindle being secured at one end thereof to the other end of said second crank arm and at the other end thereof to one end of a third crank arm at least as long as said second crank arm, the other end of said third crank arm being pivotally connected to one end of a wiper arm, the other end of which supports a wiper blade, said fixed support frame having a second spindle pivotally mounted thereon, the axis of rotation of which is parallel to the axis of rotation of said first spindle and spaced apart therefrom, there being a fourth crank arm connected at one end thereof to one end of said second spindle and pivotally connected at the other end thereof to said wiper arm at a pivot point located intermediate the ends of said wider arm such that, as the second crank arm reciprocates, said wiper blade, instead of sweeping out a conventional radial wiping arc, sweeps out an asymmetrical wiping arc which is preferentially distorted outwards relative to said conventional radial wiping arc and remains substantially the same irrespective of the direction of motion of the wiper blade.

Advantageously, the preferential distortion of the wiping arc produced as the second crank arm reciprocates reaches a maximum when the third crank arm is in line with said wiper arm.

In a preferred embodiment of the present invention, the other end of said first crank arm is also pivotally connected to one end of a fifth crank arm by a second transfer link such that rotation of said first crank arm by said drive motor produces reciprocal motion of said fifth crank arm about a third spindle pivotally mounted on a fixed support, said spindle being secured at one end thereof to the other end of said fifth crank arm and at the other end thereof to a wiper arm carrying mounted thereon a wiper blade which sweeps out a conventional radial arc as said fifth crank arm reciprocates.

Preferably, in a windscreen wiper assembly according to the present invention, when installed in a motor vehicle so as to wipe a portion of the windscreen of the motor vehicle which is located in front of a front passenger seat of the vehicle, the relative lengths of the third and fourth crank arms, the distance apart of the first and second spindles, and the distance separating the pivot points of the third and fourth crank arms on the wiper arm are chosen such that the preferential distortion of the wiping arc produced as the second crank arm reciprocates extends the wiped portion of the windscreen upwards towards an upper, outer corner of said portion of the windscreen.

The invention and how it may be performed are hereinafter particularly described with reference to the accompanying drawings, in which:

Figure 1 shows an isometric view of a portion of a windscreen wiper assembly for a motor vehicle according to one embodiment of the present invention;

Figure 2 shows a different isometric view of the portion of the windscreen wiper assembly shown in Figure 1;

Figure 3 shows an enlarged isometric view of a pivot point in the portion of the windscreen wiper assembly shown in Figure 1;

Figure 4 shows an isometric view of another portion of the windscreen wiper assembly for a motor vehicle according to said one embodiment of the present invention, with parts broken away;

Figure 5 shows a similar isometric view to that shown in Figure 4, in which the view is taken approximately normal to the view taken in Figure 4;

Figure 6 shows schematically the basic linkage geometry of the portion of the windscreen wiper assembly shown in Figures 4 and 5; and

Figure 7 shows schematically the linkage geometry of the portion of the windscreen wiper assembly shown in Figures 1 and 2.

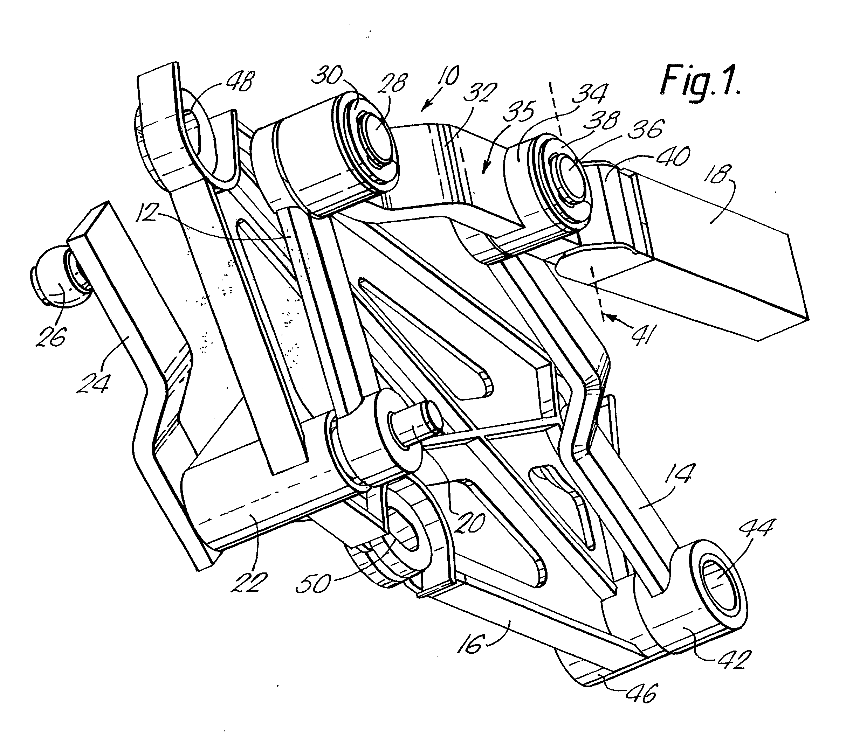

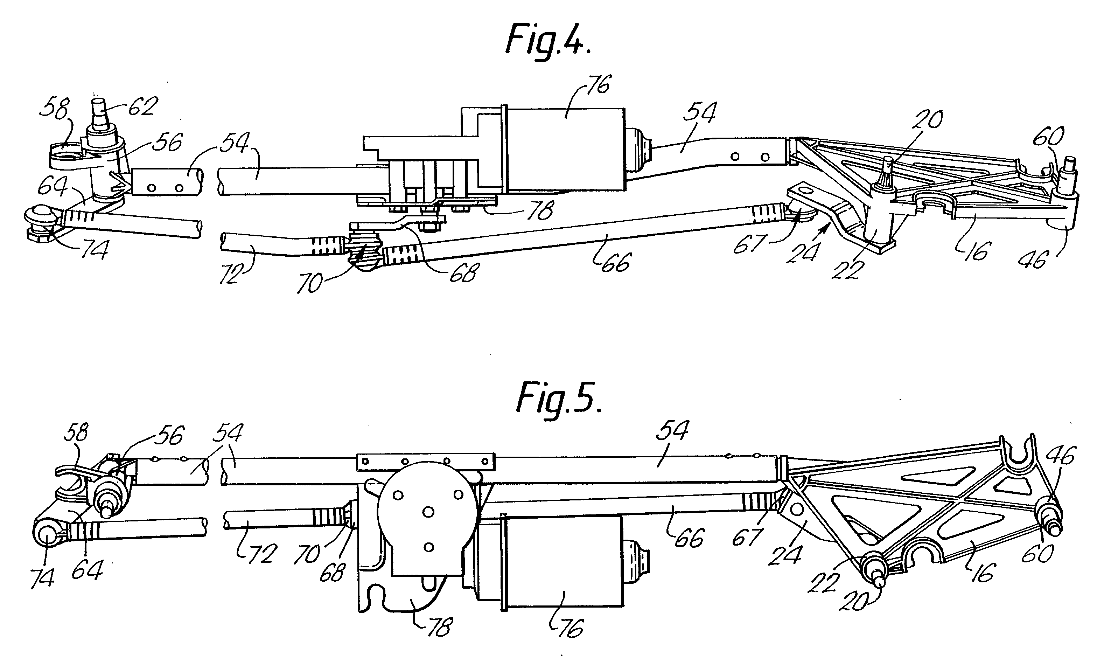

The embodiment of the present invention shown in Figures 1 to 3 of the accompanying drawings has been designed for use as a passenger windscreen wiper assembly, that is, a windscreen wiper assembly in which a wiper blade (not shown) of the assembly is designed to wipe the portion of a windscreen of a motor vehicle situated in front of a front passenger seat of the vehicle. As will be explained in more detail hereinafter in the specification, the operating action of this passenger windscreen wiper assembly results in the production of an asymmetric wiping action of the wiper blade on the windscreen which produces an outward extension of the conventional wiping arc over that portion of the windscreen through which a passenger in the front passenger seat of the vehicle would normally look. Preferably the passenger windscreen wiper assembly shown in Figures 1 to 3 is used in conjunction with a driver's windscreen wiper assembly, as shown in Figures 4 and 5, in which a wiper blade (not shown) is designed to move through a conventional wiping arc in order to wipe the portion of the windscreen situated in front of a driver's seat of the vehicle.

Referring now to Figures 1 to 3 of the accompanying drawings, these drawings show isometric views of a four-point pivoted linkage system 10 comprising a first link 12, a second, cranked link 14, a rigid support frame 16 and a wiper arm 18. One end of the first link 12 is rigidly connected by a spline connection to one end of a spindle 20 which is pivotally mounted within a bore housing 22 of the support frame 16. A drive crank 24 is rigidly connected at one end to the other end of spindle 20, and carries adjacent the other end thereof a ball stud 26 which forms part of a ball-and-socket drive connection. The other end of the first link 12 is pivotally connected to one end of the wiper arm 18 by means of a spindle 28 which is retained in position within coaxial bores (not shown) in the first link 12 and the wiper arm 18 by means of a circlip 30.

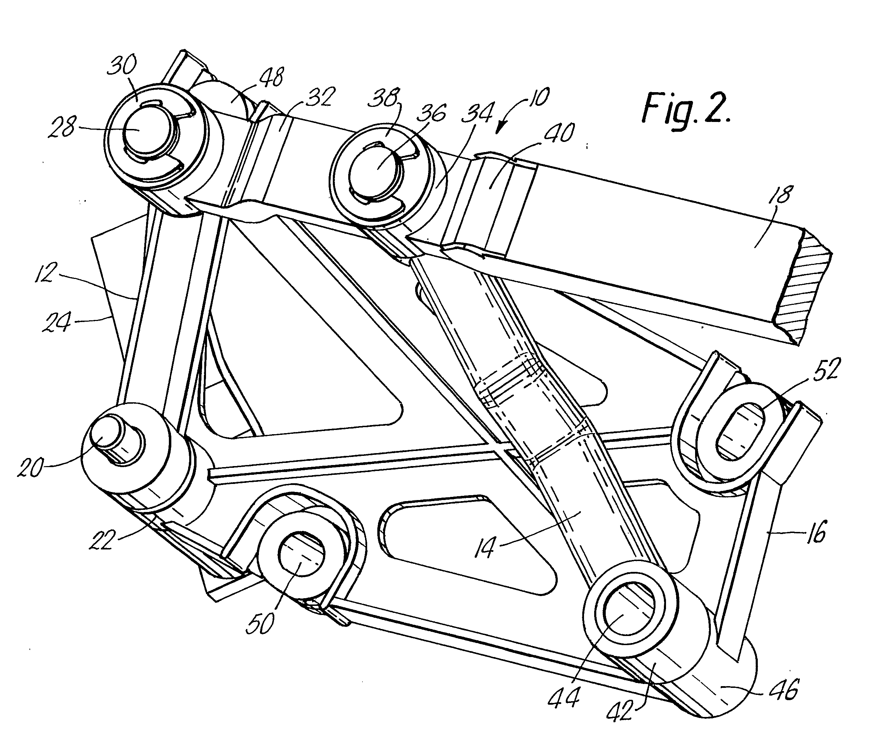

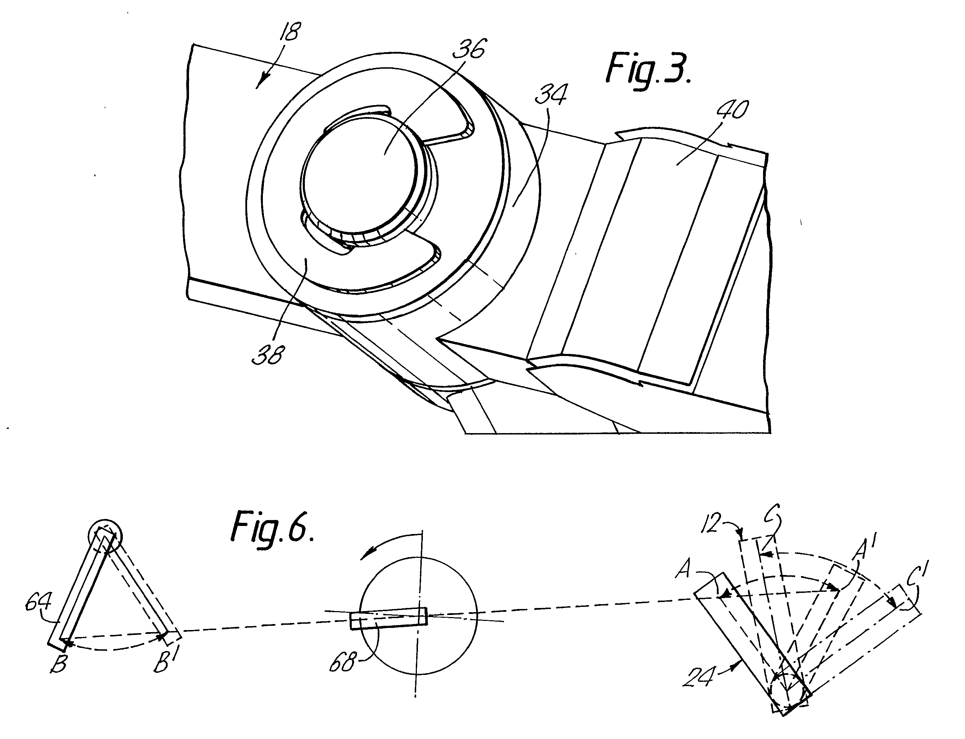

The wiper arm 18 has a cranked portion 32 formed therein adjacent said one end, and has a bore housing 34 formed therein which is spaced along the wiper arm from the cranked portion 32, as can be seen in Figures 1 and 2. Said one end of the wiper arm, said cranked portion 32 and the portion of the wiper arm in the region of the bore housing 34 all have a rectangular cross-section, and a central axis of the bore housing 34 passes at right angles through a centre line 35 of the major sides of said wiper arm 18, as indicated in Figure 1. Said central axis of the bore housing 34 is parallel to a central axis of spindle 28. One end of the second, cranked link 14 is positioned directly beneath the bore housing 34, and is pivotally connected thereto by means of a spindle 36 pivotally mounted within a transverse bore (not shown) in the bore housing 34 and retained therein by means of a circlip 38. The remainder of the wiper arm 18, only a portion of which is shown in Figures 1 to 3, is articulated adjacent the bore housing 34 by means of a spring-biased mounting 40, shown in the enlarged view of Figure 3, so that the remainder of the wiper arm 18 can pivotally flex about a central axis (indicated by the broken line 41 in Figure 1) passing through the minor sides of said portion of the wiper arm 18 in the region of the bore housing 34. This arrangement ensures that a wiper blade (not shown) fastened to the free end of the remainder of the wiper arm can remain in wiping contact with the windscreen surface throughout the operation of the windscreen wiper assembly.

The other end of the second, cranked link 14 terminates in a bore housing 42 having a transverse bore 44 formed therein which is parallel to the spindle 36 in said one end of the second, cranked link 14. Said other end of the second, cranked link 14 is pivotally connected to the rigid support frame 16 by means of a spindle (not shown) which extends through the transverse bore 44 into a similar coaxial bore (not shown) of a bore housing 46 of the rigid support frame 16, which bore housing 46 is spaced apart from bore housing 22, and has the bore axis thereof parallel to the bore axis of bore housing 22.

The rigid support frame 16 is of a substantially planar lattice construction with the two bore housings 22 and 46 positioned at respective corners of the frame 16 with the bore axes thereof extending at right angles to the plane of the frame 16. Mounting apertures 48, 50 and 52 are provided in the frame 16 to allow that frame to be secured by releasable fastenings to corresponding mounting points in the bodywork of the motor vehicle when the windscreen wiper assembly of the invention is mounted in that motor vehicle.

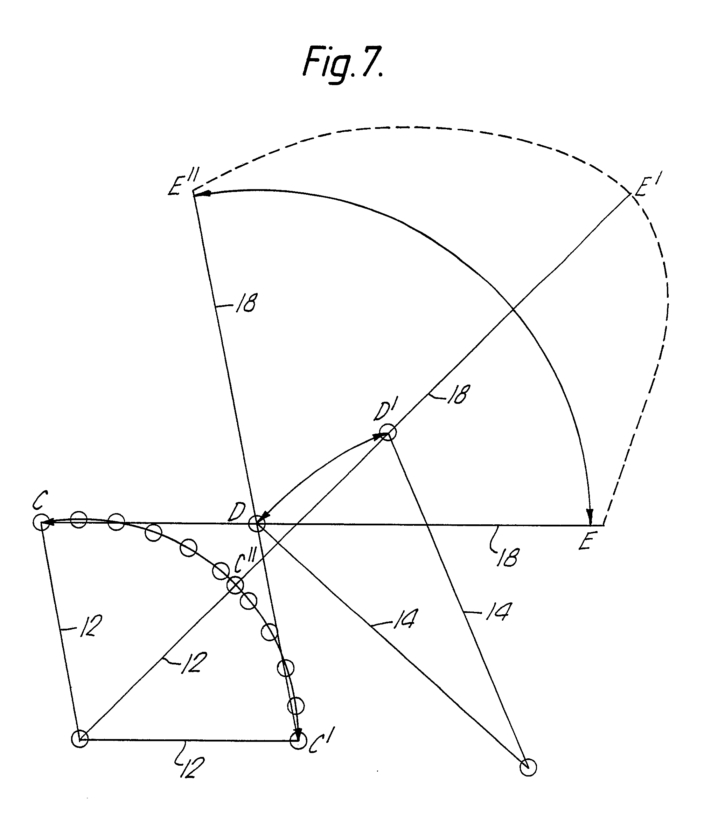

It will be appreciated by a man skilled in the art that, in the portion of the windscreen wiper assembly described so far, reciprocation of the drive crank 24 about its pivot point on the support frame 16 will produce a corresponding reciprocation of first link 12. First link 12 will transfer this reciprocal movement to said one end of the wiper arm 18 so as to cause wiper arm 18 to oscillate about the pivot point between the bore housing 34 on wiper arm 18 and said one end of the second, cranked link 14. This pivot point is not, however, a stationary one, by reason of the pivotal connection existing between the bore housing 42 of the second, cranked link 14 and the bore housing 46 on the support frame 16. Consequently, the oscillation of the wiper arm 18 about this pivot point is accompanied by similar reciprocation of the second, cranked link 14 about its pivot point on the support frame 16 which, in turn, produces an asymmetric wiping motion of the wiper blade on the free end of the wiper arm 18, as will be discussed in more detail later in the specification, with reference to Figure 7 of the drawings.

Referring now to Figures 4 and 5 of the drawings, these show the remainder of the windscreen wiper assembly according to the present invention in sufficient detail to allow the man skilled in the art to appreciate the overall layout of the assembly. In this respect, the wiper arm and wiper blade of the driver's windscreen wiper assembly have been omitted from Figures 4 and 5, since both of these items are conventional in shape and operation, and are well-known to a man skilled in the art. In Figures 4 and 5, the rigid support frame 16 of the passenger windscreen wiper assembly 10 is shown, including the bore housings 22 and 46 and the spindle 20, and also the drive crank 24. The support frame 16 is secured at one corner to one end of a support tube 54 designed to extend beneath the scuttle of the motor vehicle adjacent a lower edge of the windscreen therefor. The other end of the support tube 54 carries attached thereto a pivot housing 56 incorporating a mounting lug 58 for securing the pivot housing 56 in the correct operating position on the bodywork of the motor vehicle. Pivot housing 56 includes a transverse through bore, the longitudinal axis of which extends parallel to the respective longitudinal axes of spindle 20 and a similar spindle 60 housed in bore housing 46 of frame 16, which through bore pivotally houses a spindle 62 therein, one end of which spindle 62 is threaded to take one end of a wiper arm (not shown) of a driver's windscreen wiper assembly. The other end of the spindle 62 is secured to one end of a drive crank 64 so that reciprocation of drive crank 64 produces corresponding oscillation of spindle 62 within pivot housing 56.

Drive crank 24 attached to spindle 20 of frame 16 is connected to one end of a transfer link 66 by means of the ball-and-socket drive connection which includes ball stud 26, which drive connection is in the form of a universal ball joint 67. The other end of the transfer link 66 is coupled to one end of a motor crank arm 68 through one portion of a double universal ball joint 70, the other portion of which couples said one end of the motor crank arm 68 to one end of a second transfer link 72. The other end of the second transfer link 72 is coupled to the other end of drive crank 64 by another universal ball joint 74. The other end of motor crank arm 68 is connected to an output shaft of an electrically-driven windscreen wiper motor 76 which is mounted upon a support platform 78 secured to the support tube 54. Both drive crank 24 and drive crank 64 are longer in length than the motor crank arm 68, so that rotary movement of motor crank arm 68 by the motor 76 produces reciprocating movement of drive cranks 24 and 46, the angular extent of the reciprocation depending upon the ratio of the lengths of the drive cranks to the length of the motor crank arm 68.

The basic linkage geometry of the windscreen wiper assembly illustrated in Figures 4 and 5 of the drawings is shown schematically in Figure 6 of the drawings. As can be seen in Figure 6, rotational movement of the motor crank arm 68 in the direction shown by the arrow results in reciprocatory movement of drive crank 24 through an arc A-A' and a similar reciprocatory movement of drive crank 64 through an arc B-B'. As drive crank 24 reciprocates through arc A-A', first link 12 undergoes a similar reciprocatory movement through a larger arc C-C', due to the length of first link 12 being longer than the length of the drive crank 24. The reciprocatory movement of drive crank 64 produces a similar reciprocatory movement of the wiper arm connected to spindle 62 which causes the windscreen wiper blade secured to the free end of that wiper arm to sweep out a conventional radial wiping arc over that portion of the windscreen that is situated before the driving seat in the motor vehicle.

The linkage geometry of the passenger windscreen wiper assembly 10 illustrated in Figures 1 and 2 of the drawings is shown schematically in Figure 7 of the drawings. Figure 7 shows a graphical representation of the passenger windscreen wiper assembly 10 with the operating members of the linkage arrangement shown in three separate operating positions corresponding respectively to positions C and C' of first link 12 (as shown on Figure 6) and a third position C" of first link 12 which corresponds to the outmost position of the free end of the wiper arm of the passenger windscreen wiper assembly 10 (and of the wiper blade carried thereon) during the asymmetric wiping arc produced during operation of the wiper assembly 10. With reference to Figure 7, it can clearly be seen that, as first link 12 moves from position C towards position C', the second, cranked link 14 moves outwards from position D along an arc towards position D'. When the second, cranked link 14 reaches position D', first link 12 is in position C'', where it is directly in line with wiper arm 18, and the wiper arm has moved outwards to a maximum extent. Continued movement of first link 12 from position C'' towards position C' reverses the arcuate movement of the second, cranked link 14, which now commences to move along the arc from position D' to D, whilst the wiper arm 18 continues to complete the wiper arc in one direction (from right to left as shown in Figure 7). When the first link 12 moves from the position C' towards the position C, the second, cranked link 14 moves again from position D to position D' and back again, whilst the wiper arm 18 retraces the same wiper arc in the opposite direction (from left to right as shown in Figure 7). Consequently the wiper blade carried on the free end of wiper arm 18 sweeps out an asymmetric wiping arc which is similar in shape to the dashed curve E-E'-E'' traced out by the wiper arm in Figure 7.

Figure 7 also shows the conventional radial wiping arc of the wiping arm 18 as a solid arcuate curve extending between E and E'', and this would be the arc of movement of the wiper arm 18 if bore housing 34 were pivoted about a fixed point on the support frame 16. This solid arcuate curve shown in Figure 7 is similar in shape to the corresponding curve swept out by the wiper arm (not shown) on spindle 62 during operation of the associated driver's windscreen wiper assembly. It is clearly apparent from a study of Figure 7 the extent to which the asymmetric curve E-E'-E'' differs from the solid curve representing a conventional radial wiping arc.

The precise shape and extent of difference between the asymmetric curve E-E'-E'' and the solid curve shown in Figure 7 are dictated by the relative lengths of first link 12, second, cranked link 14 and wiper arm 18, the distance between bore housings 22 and 46 on the support frame 16, and the distance between bore housing 34 and the end of the wiper arm 18 which is pivoted to the first link 12. By the adjustment of these parameters, it is possible to provide a predefined maximum outward movement of the free end of the wiper arm 18 which occurs at a predetermined point during the wiping arc. In other words, by adjustment of these parameters in conjunction with the size and shape of the windscreen to be wiped, it is possible to arrange for the extension of the wiping arc of the windscreen wiper blade to occur so that the wiper blade clears a predetermined area of the windscreen that lies outside the area that would be wiped by that wiper blade moving through a conventional radial wiping arc. As an example of an actual windscreen wiper assembly according to this embodiment of the present invention, where the wiper arm 18 is 560mm in length and carries on the free end thereof a wiper blade 600mm long, an extension of the wiping arc by 50mm at a point on the wiping arc approximately a third of the wiping arc from point E is produced by the first link 12 having a length of 65.5mm, the second, cranked link 14 having a length of 108.38mm, the distance between bore housings 22 and 46 being 134mm, and the distance between bore housing 34 and the end of the wiper arm 18 which is pivoted to the first link 12 being 91.0mm.

The present invention provides a compact, inexpensive and robust windscreen wiper assembly for producing a desired asymmetric wiping movement of a wiper blade of the assembly over a windscreen of a motor vehicle on which the assembly is mounted, either as a single unit or in conjunction with a windscreen wiper assembly providing a conventional radial wiping movement of an associated wiper blade.

## Claims

1. A windscreen wiper assembly for a motor vehicle comprising a wiper blade supported upon one end of a wiper arm (18), the other end of which wiper arm (18) is connected to a drive motor (76) through a pivoted linkage system (10), characterised in that said drive motor (76) is drivingly connected to one end of a first crank arm (68), the other end of which is pivotally connected to one end of a second, longer crank arm (24) by a transfer link (66) such that rotation of said first crank arm (68) by said drive motor (76) produces reciprocal motion of said second crank arm (24) about a first spindle (20) pivotally mounted on a fixed support frame (16); said spindle (20) is secured at one end thereof to the other end of said second crank arm (24) and at the other end thereof to one end of a third crank arm (12) at least as long as said second crank arm (24); the other end of said third crank arm (12) is pivotally connected to said other end of said wiper arm (18); said fixed support frame (16) has a second spindle (60) pivotally mounted thereon, the axis of rotation of which is parallel to the axis of rotation of said first spindle (20) and spaced apart therefrom; there is a fourth crank arm (14) connected at one end thereof to one end of said second spindle (60) and pivotally connected at the other end thereof to said wiper arm (18) at a pivot point located intermediate the ends of said wiper arm (18) such that, as the second crank arm (24) reciprocates, said wiper blade, instead of sweeping out a conventional radial wiping arc, sweeps out an asymmetrical wiping arc which is preferentially distorted outwards relative to said conventional radial wiping arc and remains substantially the same irrespective of the direction of motion of the wiper blade.

2. A windscreen wiper assembly for a motor vehicle according to claim 1, characterised in that the preferential distortion of the wiping arc produced as the second crank arm (24) reciprocates reaches a maximum when the third crank arm (12) is in line with said wiper arm (18).

3. A windscreen wiper assembly according to claim 1 or 2, characterised in that the other end of said first crank arm (68) is also pivotally connected to one end of a fifth crank arm (64) by a second transfer link (72) such that rotation of said first crank arm (68) by said drive motor (76) produces reciprocal motion of said fifth crank arm (64) about a third spindle (62) pivotally mounted on a fixed support (56), said spindle (62) being secured at one end thereof to the other end of said fifth crank arm (64) and at the other end thereof to a wiper arm carrying mounted thereon a wiper blade which sweeps out a normal radial arc as said fifth crank arm (64) reciprocates.

4. A windscreen wiper assembly for a motor vehicle according to claim 1, 2 or 3, when installed in a motor vehicle so as to wipe a portion of the windscreen of the motor vehicle which is located in front of a front passenger seat of the vehicle, characterised in that the relative lengths of the third and fourth crank arms (12,14), the distance apart of the first and second spindles (20,60), and the distance separating the pivot points of the third and fourth crank arms (12,14) on the wiper arm (18) are chosen such that the preferential distortion of the wiping arc produced as the second crank arm (24) reciprocates extends the wiped portion of the windscreen upwards towards an upper, outer corner of said portion of the windscreen.

Fig.1.

Fig.2.

Fig.3.

Fig.6.

## Fig.4.

## Fig.5.

EP 0 382 346 A2

Fig.7.